# EUROPÄISCHE PATENTANMELDUNG

(11) **EP 4 438 264 A1**
(43) Veröffentlichungstag der Anmeldung: **02.10.2024**
(21) Anmeldenummer: 23164897.3
(22) Anmeldetag: 29.03.2023
(51) Int. Cl.: B29C 48/40, B29C 48/58, B29C 48/69, B29C 48/74, B29C 48/76, B29B 17/00, B29B 7/84, B29C 48/425

(54) **VORRICHTUNG UND VERFAHREN ZUM AUFBEREITEN VON KUNSTSTOFFMATERIAL**

(71) Anmelder: Coperion GmbH, 70469 Stuttgart (DE)
(72) Erfinder: Schofer, Jochen, 70435 Stuttgart (DE); Liber, Leonid, 71277 Rutesheim (DE)
(74) Vertreter: Ege Lee & Roider Patentanwälte

(57) **Zusammenfassung**

Vorrichtung (100) zum Aufbereiten von Kunststoffmaterial (102), umfassend: eine Mehrwellenschneckenmaschine (104), insbesondere eine Zweiwellen-Schneckenmaschine, mit zumindest zwei in einem Gehäuse (108) gelagerte Behandlungselement-Wellen (130) zum Plastifizieren des zugeführten Kunststoffmaterials (102) zu einer Kunststoffschmelze (106), wobei die Mehrwellenschneckenmaschine (104) eine Plastifizierzone (144), eine Austragszone (148) und eine zwischen der Plastifizierzone (144) und der Austragszone (148) angeordnete Stauzone (146) mit zumindest einem die Kunststoffschmelze (106) aufstauenden Stauelement (158) aufweist; mindestens einen die Stauzone (146) überbrückenden Schmelzekanal (160), der die Plastifizierzone (144) und die Austragszone (148) miteinander verbindet; und mindestens eine Schmelzefiltereinrichtung (162) zum Filtrieren der Kunststoffschmelze (106), die in dem Schmelzekanal (160) wirksam angeordnet ist, sowie Verfahren zum Aufbereiten von Kunststoffmaterial (102), umfassend folgende Schritte: Zuführen des Kunststoffmaterials (102) in eine Mehrwellenschneckenmaschine (104), insbesondere Zweiwellen-Schneckenmaschine; Plastifizieren des zugeführten Kunststoffmaterials (102) mittels der Mehrwellenschneckenmaschine (104) zu einer Kunststoffschmelze (106); Herausführen zumindest eines Teils der Kunststoffschmelze (106) aus der Mehrwellenschneckenmaschine (104); Filtrieren der herausgeführten Kunststoffschmelze (106) mittels einer Schmelzefiltereinrichtung (162); und Zurückführen der filtrierten Kunststoffschmelze (106) in die Mehrwellenschneckenmaschine (104).

## Beschreibung

Die Erfindung betrifft eine Vorrichtung zum Aufbereiten von Kunststoffmaterial, beispielsweise Kunststoff-Recyclingmaterial und/oder Kunststoffabfall. Außerdem betrifft die Erfindung ein Verfahren zum Aufbereiten von Kunststoffmaterial, wie Kunststoff-Recyclingmaterial und/oder Kunststoffabfall.

Kunststoff-Recyclingmaterial, wie beispielsweise Post-Consumer-Abfall, stellt eine wichtige Rohstoffquelle dar. Bei Kunststoff-Recyclingmaterial sind die Kunststoffe jedoch meist verunreinigt, beispielsweise mit Biomasse, Sand, Papier, Glas, Aluminium und dergleichen. Kunststoffabfälle, speziell Verpackungsabfälle, liegen daher häufig ausschließlich als Gemische mit hohem Verschmutzungsgrad vor. Deren Recycling ist zumeist schwierig, da die Sortierung und Reinigung der Abfälle in vielen Fällen nicht ökonomisch sinnvoll oder technisch umsetzbar sind. Das chemische Recycling gilt als vielversprechender Prozess, um diese Materialströme dennoch rohstofflich rezyklieren zu können.

Beim chemischen Recycling wird, nachdem das Kunststoff-Recyclingmaterial, geschreddert oder kompaktiert, in das Verfahrensteil eines Doppelschneckenextruders eingebracht wurde, in kürzester Zeit aufgrund kontinuierlicher Oberflächenerneuerung sowie intensiver Dispergierung und Scherung über die Doppelwellen sehr viel mechanische Energie in das Kunststoffmaterial eingetragen. Weitere Stoffe wie Katalysatoren können bei Bedarf zudosiert und eingemischt werden. Teilweise werden mit den Kunststoffabfällen Wasserrückstände oder Chloride aus PVC in den Extruder eingebracht. Beides kann über Vakuumentgasungen am Verfahrensteil des Extruders abgeführt werden. Anschließend wird die Kunststoffschmelze einem Pyrolysereaktor zugeführt. Im Reaktor wird die Schmelze, die zuvor im Doppelschneckenextruder erhitzt wurde, weiter aufgeheizt. Bei bis zu 500°C erfolgt die Pyrolyse der Polymere. Gleichzeitig werden unter Sauerstoffausschluss Kettenreaktionen ausgelöst, die zur Spaltung der Polymere in ein Gemisch aus flüssigen und gasförmigen Kohlenwasserstoffen führen. Alle anorganischen Bestandteile des Kunststoff-Recyclingmaterials verbleiben im Sumpf des Reaktors und werden dort ausgeschleust. Die organischen Kohlenwasserstoffe der Polymere verflüchtigen sich. Sie werden zu Monomeren, petrochemischen Grundstoffen oder Synthesegasen umgewandelt und in einem Destillator zu marktfähigen Produkten, wie Öl, Schweröl oder Wachsen, weiterverarbeitet.

Da das Kunststoff-Recyclingmaterial, insbesondere bei Verpackungsabfällen, als Gemisch mit hohem Verschmutzungsgrad vorliegt, wäre es wünschenswert, die verunreinigte Kunststoffschmelze zu filtrieren, um so eine bessere Aufbereitung zu ermöglichen und qualitativ hochwertigere Produkte zu erhalten.

Der Erfindung liegt die Aufgabe zugrunde, eine eingangs genannte Vorrichtung zum Aufbereiten von Kunststoffmaterial strukturell und/oder funktionell zu verbessern. Außerdem liegt der Erfindung die Aufgabe zugrunde, ein eingangs genanntes Verfahren zum Aufbereiten von Kunststoffmaterial strukturell und/oder funktionell zu verbessern. Es ist daher eine Aufgabe der vorliegenden Erfindung, eine Aufbereitungsvorrichtung und ein Aufbereitungsverfahren bereitzustellen, welche die im Zusammenhang mit dem Stand der Technik aufgezeigten Probleme reduzieren bzw. beseitigen. Beispielweise ist es eine Aufgabe eine Filtration der Kunststoffschmelze beim chemischen Recycling zu ermöglichen.

Die Aufgabe wird gelöst mit einer Vorrichtung mit den Merkmalen des Anspruchs 1. Außerdem wird die Aufgabe gelöst mit einem Verfahren mit den Merkmalen des Anspruchs 9. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Aspekt betrifft eine Vorrichtung zum Aufbereiten von Kunststoffmaterial. Die Vorrichtung kann eine Aufbereitungsanlage sein.

Das Kunststoffmaterial kann Kunststoff-Recyclingmaterial sein oder umfassen. Das Kunststoff-Recyclingmaterial kann Kunststoffabfall, z.B. Endverbraucher-Kunststoffabfall ("post consumer waste"), sein. Das Kunststoff-Recyclingmaterial kann Post-Consumer-Abfall, beispielsweise Verpackungsabfall, sein. Insbesondere kann das Kunststoff-Recyclingmaterial Kunststoffmaterial sein, das chemisch recycelt werden muss. Das Kunststoff-Recyclingmaterial liegt vorzugweise als Kunststoffpartikel, die insbesondere ein Gemisch mit hohem Verschmutzungsgrad bilden. Die Kunststoffpartikel können je nach Partikelgröße und/oder Partikelform beispielsweise als Kunststoffgranulat, Kunststoffflocken, Kunststofffasern oder Kunststoffpulver vorliegen. Die Kunststoffpartikel können Recyclat sein. Die Kunststoffpartikel können auch schnipselförmig und/oder flakeförmig sein. Das Kunststoff-Recyclingmaterial kann auch geschreddert, gemahlen oder kompaktiert worden sein. Insbesondere bildet das Kunststoff-Recyclingmaterial bzw. die Kunststoffpartikel Schüttgut. Das Kunststoffmaterial kann, insbesondere thermoplastische, Polymere aufweisen.

Die Vorrichtung umfasst vorzugsweise eine Mehrwellenschneckenmaschine mit zumindest zwei in einem Gehäuse gelagerte Behandlungselement-Wellen zum Plastifizieren des zugeführten Kunststoffmaterials zu einer Kunststoffschmelze. Die zumindest zwei Behandlungselement-Wellen können zum Plastifizieren und/oder Aufbereiten der Kunststoffschmelze ausgebildet sein. Das Gehäuse kann ein Zylindergehäuse sein, in dem die zumindest zwei Behandlungselement-Wellen aufgenommen sind.

Zum Zuführen des Kunststoffmaterials in die Mehrwellenschneckenmaschine kann die Mehrwellenschneckenmaschine eine Zuführöffnung aufweisen. Vorzugsweise kann die Zuführöffnung in einer Einzugszone der Mehrwellenschneckenmaschine vorgesehen sein. In einer Variante kann die Zuführöffnung eine Haupt-Zuführöffnung, z.B. Haupt-Einlauf, der Mehrwellenschneckenmaschine sein. Die Vorrichtung kann ferner eine Zuführvorrichtung und/oder Dosiereinrichtung zum Zuführen des Kunststoffmaterials umfassen. Das Zuführen des Kunststoffmaterials kann beispielsweise kontinuierlich und/oder dosiert erfolgen. Alternativ kann das Zuführen des Kunststoffmaterials diskontinuierlich erfolgen.

Die Schneckenmaschine kann eine Plastifizierzone, eine Austragszone und eine zwischen der Plastifizierzone und der Austragszone angeordnete Stauzone aufweisen. Vorzugsweise kann die Plastifizierzone der Stauzone unmittelbar bzw. direkt vorgeschalten sein. Die Austragszone kann der Stauzone unmittelbar bzw. direkt nachgeschalten sein. Die Stauzone kann beispielsweise zumindest ein die Kunststoffschmelze aufstauendes Stauelement aufweisen. Das zumindest eine Stauelement kann in dem Gehäuse angeordnet sein. Es können auch mehrere Stauelemente, beispielsweise zwei, drei oder vier, Stauelemente, vorgesehen sein. Beispielsweise kann jeweils zumindest ein Stauelement durch eine Behandlungselement-Welle ausgebildet und/oder an bzw. auf dieser angeordnet sein. So kann zum Beispiel ein Stauelement auf bzw. an einer ersten Behandlungselement-Welle und ein weiteres Stauelement auf bzw. an einer zweiten Behandlungselement-Welle angeordnet sein.

Die Vorrichtung kann ferner mindestens einen die Stauzone überbrückenden Schmelzekanal aufweisen, der die Plastifizierzone und die Austragszone miteinander verbindet. Die Vorrichtung kann somit ausgebildet sein, die Kunststoffschmelze von der Plastifizierzone durch den Schmelzekanal hindurch in die Austragszone zu leiten.

Gemäß einer bevorzugten Variante kann die Vorrichtung mindestens eine Schmelzefiltereinrichtung zum Filtrieren der Kunststoffschmelze aufweisen. Die zumindest eine Schmelzefiltereinrichtung kann in dem Schmelzekanal wirksam angeordnet sein. Beispielsweise kann ein Schmelzekanalabschnitt in die Schmelzefiltereinrichtung führen bzw. an einem Eingang der Schmelzefiltereinrichtung angeschlossen sein. Ferner kann ein weiterer Schmelzekanalabschnitt an einem Ausgang der Schmelzefiltereinrichtung angeschlossen sein. In dem Gehäuse der Mehrwellenschneckenmaschine kann unmittelbar vor der Stauzone eine Ausmündung in den zur Schmelzefiltereinrichtung führenden Schmelzekanal vorgesehen sein. Ferner kann in dem Gehäuse der Mehrwellenschneckenmaschine unmittelbar nach der Stauzone eine Einmündung des von der Schmelzefiltereinrichtung kommenden Schmelzekanals vorgesehen sein. Ein Schmelzekanalabschnitt kann daher mit seinem einen Ende mit der Ausmündung im Gehäuse und mit seinem anderen Ende mit dem Eingang der Schmelzefiltereinrichtung verbunden sein. Ein weiterer Schmelzekanalabschnitt kann mit seinem einen Ende mit dem Ausgang der Schmelzefiltereinrichtung und mit seinem anderen Ende mit der Einmündung im Gehäuse verbunden sein. Sowohl die Ausmündung als auch die Einmündung kann eine Öffnung im Gehäuse sein, aus der die Kunststoffschmelze aus der Mehrwellenschneckenmaschine herausgeführt bzw. wieder in die Mehrwellenschneckenmaschine wieder eingeführt werden kann.

Die zumindest eine Schmelzefiltereinrichtung kann zumindest einen Schmelzefilter aufweisen. Der zumindest eine Schmelzefilter kann kontinuierlich oder diskontinuierlich betreibbar sein. Der Schmelzefilter kann ein oder mehrere Filtereinheiten mit einem Filterelement aufweisen. Das Filterelement kann zum Beispiel ein Filtersieb und/oder Filterzylinder sein, der ausgebildet ist, die Kunststoffschmelze zu filtrieren. In einer Ausführungsvariante kann die zumindest eine Schmelzefiltereinrichtung eine Druckaufbaueinheit zum Aufbauen eines Schmelzedrucks aufweisen. Die Druckaufbaueinheit kann beispielsweise eine Schmelzepumpe und/oder Zahnradpumpe sein. Bevorzugt kann die Druckaufbaueinheit dem Schmelzefilter vorgeschalten sein, beispielsweise derart, dass die Druckaufbaueinheit die Kunststoffschmelze mit einem bestimmten Schmelzedruck durch den Schmelzefilter drücken kann.

Zusätzlich kann in dem Gehäuse der Mehrwellenschneckenmaschine zumindest eine Entgasungsöffnung zum Entgasen vorgesehen sein. Die zumindest eine Entgasungsöffnung kann in der Einzugszone, der Plastifizierzone, der Stauzone oder der Austragszone der Mehrwellenschneckenmaschine angeordnet sein. Beispielsweise kann die zumindest eine Entgasungsöffnung mit einer Entgasungseinrichtung, z.B. Vakuum-Entgasungseinrichtung, verbundenen sein. Alternativ kann die zumindest eine Entgasungsöffnung zur Entgasung und/oder Entlüftung gegenüber Atmosphäre ausgebildet sein. Es können auch mehrere Entgasungsöffnung vorgesehen sein, beispielsweise in allen oder verschiedenen Zonen der Mehrwellenschneckenmaschine.

Die Mehrwellenschneckenmaschine kann als gleichsinnig oder gegensinnig drehangetriebene und/oder dicht kämmende Mehrwellen-Schneckenmaschine ausgebildet sein. Die zumindest zwei Behandlungselement-Wellen können in dem Gehäuse drehbar gelagert sein. Die zumindest zwei Behandlungselement-Wellen können eine Extruderschnecken sein. Vorzugsweise kann die Mehrwellenschneckenmaschine als eine Zweiwellen-Schneckenmaschine ausgebildet sein. Die Mehrwellenschneckenmaschine kann insbesondere ein Doppelschneckenextruder sein. Das Plastifizieren und/oder Aufbereiten kann mittels der Behandlungselement-Wellen der Mehrwellenschneckenmaschine erfolgen.

An einem in Förderrichtung letzten Gehäuseabschnitt des Gehäuses kann eine Austragsöffnung vorgesehen sein. Durch die Austragsöffnung kann die, insbesondere aufbereitete und/oder entgaste und/oder filtrierte, Kunststoffschmelze ausbringbar sein. An der Austragsöffnung kann ein Reaktor, ein Extrusionswerkzeug, ein Strangkopfwerkzeug, eine Düsenvorrichtung oder eine Schneckenmaschine angeschlossen sein. Der Reaktor kann eine Pyrolysereaktor sein. Der Pyrolysereaktor kann zur Pyrolyse der Kunststoffschmelze ausgebildet sein. An dem Reaktor kann ein Destillator angeschlossen sein. Alternativ kann an der Austragsöffnung eine Filtereinrichtung und/oder eine Granuliereinrichtung oder eine andere Weiterverarbeitungsanlage angeschlossen sein.

Ein weiterer Aspekt betrifft ein Verfahren zum Aufbereiten von Kunststoffmaterial, insbesondere des vorstehend und/oder nachfolgend beschriebenen Kunststoffmaterials. Bei dem Kunststoffmaterial kann es sich daher beispielsweise um Kunststoff-Recyclingmaterial handeln. Das Verfahren kann ein Aufbereitungsverfahren sein. Das Verfahren kann ferner mit der vorstehend und/oder nachfolgend beschrieben Vorrichtung durchgeführt werden.

Bei dem Verfahren kann das Kunststoffmaterial zunächst in eine Mehrwellenschneckenmaschine zugeführt werden. Dabei kann dem Kunststoffmaterial zumindest ein Zusatzstoff hinzugefügt werden. Das Zuführen des Kunststoffmaterials kann beispielsweise mittels einer Zuführvorrichtung und/oder Dosiereinrichtung erfolgen. Dabei kann das Zuführen des Kunststoffmaterials kontinuierlich und/oder dosiert erfolgen. Alternativ kann das Zuführen des Kunststoffmaterials diskontinuierlich erfolgen. Beispielsweise kann das Zuführen des Kunststoffmaterials über eine Zuführöffnung der Mehrwellenschneckenmaschine erfolgen. In einer Variante kann die Zuführöffnung eine Haupt-Zuführöffnung, z.B. Haupt-Einlauf, der Mehrwellenschneckenmaschine sein.

Das zugeführte Kunststoffmaterial kann dann mittels der Mehrwellenschneckenmaschine zu einer Kunststoffschmelze plastifiziert werden. Unter Plastifizieren kann ein Aufschmelzen des Kunststoffmaterials verstanden werden. Das Plastifizieren kann so erfolgen und/oder die Mehrwellenschneckenmaschine so gesteuert werden, dass eine bestimmte Schmelzetemperatur erreicht und/oder gehalten werden kann. Dabei kann das Plastifizieren mittels zumindest zwei Behandlungselement-Wellen der Mehrwellenschneckenmaschine erfolgen, beispielsweise in der Plastifizierzone der Mehrwellenschneckenmaschine. In einer bevorzugten Ausführungsvariante kann das Plastifizieren mittels genau zwei Behandlungselement-Wellen der Mehrwellenschneckenmaschine, wie Zweiwellen-Schneckenmaschine, erfolgen.

Bei dem Verfahren kann zumindest ein Teil der Kunststoffschmelze aus der Mehrwellenschneckenmaschine herausgeführt werden. Beispielsweise kann die Kunststoffschmelze vollständig und/oder kontinuierlich aus der Mehrwellenschneckenmaschine herausgeführt werden. Die herausgeführte Kunststoffschmelze kann dann mittels einer Schmelzefiltereinrichtung filtriert werden. Anschließend kann die filtrierte Kunststoffschmelze wieder in die Mehrwellenschneckenmaschine zurückgeführt werden.

In einer weiteren Ausführungsvariante kann die Kunststoffschmelze homogenisiert und/oder entgast werden. Das Entgasen kann zum Beispiel über eine Entgasungsöffnung und/oder mit einer Entgasungseinrichtung erfolgen. Ferner kann das Entgasen in der Einzugszone, der Plastifizierzone, der Stauzone und/oder der Austragszone der Mehrwellenschneckenmaschine erfolgen.

Sodann kann die aufbereitete und/oder filtrierte und/oder entgaste Kunststoffschmelze aus der Mehrwellenschneckenmaschine ausgetragen werden. In einer bevorzugten Variante kann dann die aus der Mehrwellenschneckenmaschine ausgetragene, filtrierte Kunststoffschmelze einem Reaktor, beispielsweise Pyrolysereaktor, zugeführt werden. Im Reaktor kann dann die Pyrolyse der Kunststoffschmelze erfolgen. An dem Reaktor kann ein Destillator angeschlossen sein. Nach der Pyrolyse kann eine Destillation erfolgen. Alternativ kann die aus der Mehrwellenschneckenmaschine ausgetragene, filtrierte Kunststoffschmelze mittels einer Filtereinrichtung filtriert und/oder mittels einer Granuliereinrichtung granuliert werden. In einer Variante kann die aus der Mehrwellenschneckenmaschine ausgetragene, filtrierte Kunststoffschmelze einem Extrusionswerkzeug, einem Strangkopfwerkzeug, einer Düsenvorrichtung, einer Schneckenmaschine, einer Filtereinrichtung, einer Granuliereinrichtung oder einer anderen Weiterverarbeitungsanlage zugeführt werden.

Mit der Erfindung kann beim chemischen Recycling die verunreinigte Kunststoffschmelze energieeffizient filtriert werden. Die Aufbereitung des Kunststoffmaterials kann dadurch verbessert werden.

Nachfolgend werden Ausführungsbeispiele der Erfindung unter Bezugnahme auf Figuren näher beschrieben, dabei zeigen schematisch und beispielhaft:

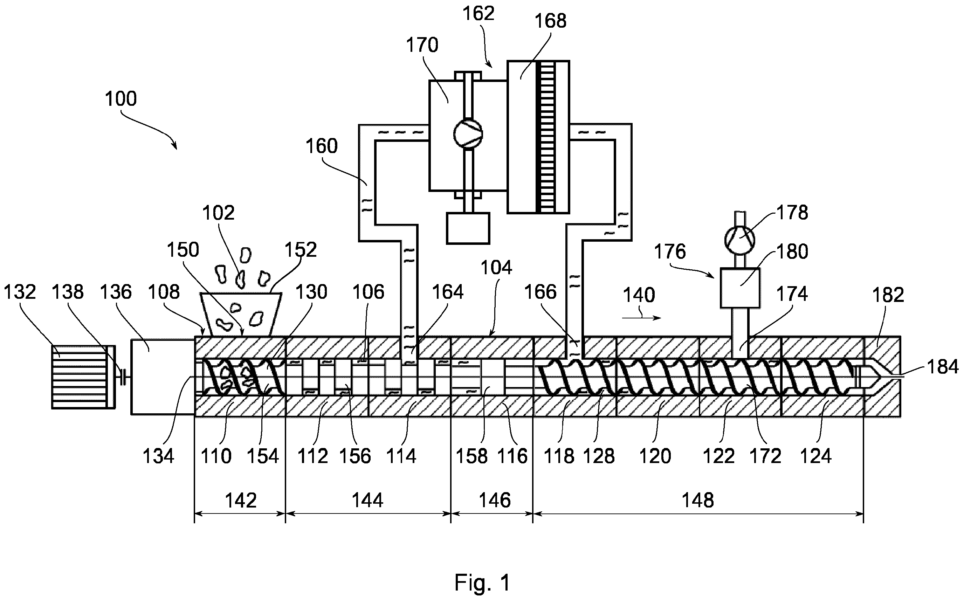

- Fig. 1: eine teilweise geschnittene Ansicht einer Vorrichtung zur Aufbereitung von Kunststoffmaterial.

Fig. 1 zeigt eine Aufbereitungsvorrichtung 100 zur Aufbereitung von Kunststoff-Recyclingmaterial 102. Die Aufbereitungsvorrichtung 100 umfasst eine Mehrwellenschneckenmaschine 104 und dient zum Plastifizieren des Kunststoff-Recyclingmaterials 102 zu einer Kunststoffschmelze 106, zum Filtrieren der aufgeschmolzenen Kunststoffschmelze 106 und dem Aufbereiten der Kunststoffschmelze 106.

Die Mehrwellenschneckenmaschine 104 ist als gleichsinnig rotierende Zweiwellenschneckenmaschine, hier als Doppelschneckenextruder, ausgebildet. Die Mehrwellenschneckenmaschine 104 umfasst ein Gehäuse 108 aus mehreren nacheinander angeordneten Gehäuseabschnitten 110 bis 124, die zur Ausbildung des Gehäuses 108 miteinander verbunden sind. In dem Gehäuse 108 sind zwei zueinander parallele und einander durchdringende Gehäusebohrungen 128 ausgebildet, die im Querschnitt die Form einer liegenden Acht haben. Die Mehrwellenschneckenmaschine 104 umfasst ferner zwei in den Gehäusebohrungen 128 konzentrisch angeordnete Behandlungselement-Wellen 130, die von einem Antriebsmotor 132 um zugehörige Drehachsen 134 drehantreibbar sind. Zwischen den Behandlungselementwellen 130 und dem Antriebsmotor 132 sind ein Verzweigungsgetriebe 136 und eine Kupplung 138 angeordnet. Mittels des Antriebsmotors 132 werden die beiden Behandlungselement-Wellen 130 gleichsinnig, d.h. in gleichen Drehrichtungen, um die Drehachsen 134 drehangetrieben. Die Behandlungselement-Wellen 130 sind zum Plastifizieren des zugeführten Kunststoff-Recyclingmaterials 102 zu der Kunststoffschmelze 106 und zum Aufbereiten der Kunststoffschmelze 106 ausgebildet.

Wie in Fig. 1 dargestellt, weist die Mehrwellenschneckenmaschine 104 in einer Förderrichtung 140 nacheinander eine Einzugszone 142, eine Plastifizierzone 144, eine Stauzone 146 und eine Austragszone 148 auf.

In der Einzugszone 142 weist der Gehäuseabschnitt 110 eine Zuführöffnung 150 mit einem Haupt-Einlauftrichter 152 zum Zuführen des Kunststoff-Recyclingmaterials 102 in die Mehrwellenschneckenmaschine 104 auf. Die Behandlungselement-Wellen 130 umfassen in der Einzugszone 142 Schneckenelemente 154 zum Fördern des Kunststoff-Recyclingmaterials 102 in Förderrichtung 140.

In der Plastifizierzone 144 erfolgt ein Aufschmelzen des Kunststoff-Recyclingmaterials 102. Zum Aufschmelzen weisen die Behandlungselement-Wellen 130 in der Plastifizierzone 144 als Knetscheiben ausgebildete Knetelemente 156 auf. In der Plastifizierzone 144 wird das Kunststoff-Recyclingmaterials 102 zu der Kunststoffschmelze 106 aufgeschmolzen. Zusätzlich kann die Kunststoffschmelze 106 in der Plastifizierzone 144 homogenisiert werden.

Die Stauzone 146 ist zwischen der Plastifizierzone 144 und der Austragszone 148 angeordnet. In der Stauzone 148 erfolgt ein Aufstauen der Kunststoffschmelze 106. Hierzu weisen die Behandlungselement-Wellen 130 in der Stauzone 144 jeweils ein Stauelement 158 auf, beispielsweise eine Stauscheibe. Durch das Aufstauen wird die Kunststoffschmelze 106 im Wesentlichen entgegen der Förderrichtung 140 zurückgedrückt. Die Aufbereitungsvorrichtung 100 weist ferner einen die Stauzone 146 überbrückenden Schmelzekanal 160 auf, der die Plastifizierzone 144 und die Austragszone 148 miteinander verbindet. In dem Schmelzekanal 160 ist eine Schmelzefiltereinrichtung 162 zum Filtrieren der Kunststoffschmelze 106 wirksam angeordnet. Die durch das Stauelement 158 zurückgedrückte Kunststoffschmelze 106 wird durch eine in dem Gehäuse 108 unmittelbar vor der Stauzone 146 vorhandene Ausmündung 164 in den zur Schmelzefiltereinrichtung 162 führenden Schmelzekanal 160 gedrückt.

Die Schmelzefiltereinrichtung 162 weist einen kontinuierlich oder diskontinuierlich betreibbaren Schmelzefilter 168 auf. Der Schmelzefilter 168 kann ein oder mehrere Filterelemente umfassen, die zum Filtrieren der Kunststoffschmelze 106 ausgebildet sind. Ferner weist die Schmelzefiltereinrichtung 162 eine als Schmelzepumpe ausgebildete Druckaufbaueinheit 170 zum Aufbauen eines Schmelzedrucks auf. Mittels der Druckaufbaueinheit 170 kann die Kunststoffschmelze 106 mit einem bestimmten Druck durch den Schmelzefilter 168 gedrückt werden.

Nachdem die Kunststoffschmelze 106 durch die Schmelzefiltereinrichtung 162 filtriert wurde, wird sie durch eine in dem Gehäuse 108 unmittelbar nach der Stauzone 146 vorhandene Einmündung 166 des von der Schmelzefiltereinrichtung 162 kommenden Schmelzekanals 160 wieder in die Mehrwellenschneckenmaschine 104 zurückgeführt, wobei die filtrierte Kunststoffschmelze 106 dann in die Austragszone 148 gelangt.

In der Austragszone 148 weisen die Behandlungselement-Wellen 130 Schneckenelemente 172, beispielsweise Förder-Schneckenelemente 172 zum Austragen der filtrierten Kunststoffschmelze 1 06 auf. Ferner ist in dem Gehäuseabschnitt 122 eine Entgasungsöffnung 174 zum Entgasen der Kunststoffschmelze 106 ausgebildet. Die Entgasungsöffnung 174 ist an eine Vakuum-Entgasungseinrichtung 176 angeschlossen, sodass die Kunststoffschmelze 106 über die Entgasungsöffnung 174 mittels der Vakuum-Entgasungseinrichtung 176 entgast wird. Die Vakuum-Entgasungseinrichtung 176 umfasst eine Vakuumpumpe 178, die über einen Abscheider 180 an die Entgasungsöffnung 174 angeschlossen ist. Alternativ kann die Entgasungsöffnung 174 zur Entgasung und/oder Entlüftung gegenüber Atmosphäre ausgebildet sein. An dem letzten Gehäuseabschnitt 124 ist eine das Gehäuse 108 abschließende Düsenplatte 182 angeordnet, die eine Austragsöffnung 184 ausbildet. Durch die Austragsöffnung 184 kann die filtrierte Kunststoffschmelze 1 06 ausgebracht werden. An der Austragsöffnung 184 kann Reaktor, insbesondere ein Pyrolysereaktor, angeschlossen sein (in Fig. 1 nicht näher dargestellt). Der Reaktor kann zur Pyrolyse der ausgebrachten, filtrierten Kunststoffschmelze 106 ausgebildet sein. An dem Reaktor kann zusätzlich ein Destillator angeschlossen sein.

Die Aufbereitungsvorrichtung 100 bzw. dessen Mehrwellenschneckenmaschine 104 ist insbesondere ausgebildet, die Kunststoffschmelze 106 zu plastifizieren und zu filtrieren. Somit kann beim chemischen Recycling mittels eines Doppelschneckenextruders die verunreinigte Kunststoffschmelze filtriert werden.

Nachfolgend ist die Aufbereitung des Kunststoff-Recyclingmaterials 102 bzw. das Aufbereitungsverfahren mittels der Aufbereitungsvorrichtung 100 beschrieben.

Das zerkleinerte Kunststoff-Recyclingmaterial 102 wird, beispielsweise mittels einer Zuführvorrichtung und/oder über den Haupt-Einlauftrichter 152, in die Mehrwellenschneckenmaschine 104 zugeführt und gelangt dann in die Einzugszone 142. In der Einzugszone 142 wird das Kunststoff-Recyclingmaterial 102 in der Förderrichtung 140 zu der Plastifizierzone 144 gefördert. Sodann wird das zugeführte Kunststoff-Recyclingmaterial 102 in der Plastifizierzone 144 mittels der Behandlungselement-Wellen 130 bzw. deren Knetelemente 156 zu einer Kunststoffschmelze 106 aufgeschmolzen.

Unmittelbar vor der Stauzone 146 wird zumindest ein Teil der Kunststoffschmelze 106 aus der Mehrwellenschneckenmaschine 104 herausgeführt und dann mittels der Schmelzefiltereinrichtung 162 filtriert. Die filtrierte Kunststoffschmelze 106 wird dann wieder in die Mehrwellenschneckenmaschine 104 zurückgeführt, wo sie in die Austragszone 148 gelangt.

Aus der Kunststoffschmelze 106 entweichende Gase werden in der Austragszone 148 mittels der Vakuum-Entgasungseinrichtung 176 abgeführt. Anschließend wird die filtrierte Kunststoffschmelze 106 aus der Mehrwellenschneckenmaschine 104 ausgetragen.

Die ausgebrachte Kunststoffschmelze 106 kann dann einem Reaktor, beispielsweise Pyrolysereaktor, zugeführt werden. Im Reaktor kann dann die Pyrolyse der Kunststoffschmelze 106 erfolgen. An dem Reaktor kann ein Destillator angeschlossen sein, sodass nach der Pyrolyse eine Destillation erfolgen kann.

Alternativ kann die aus der Mehrwellenschneckenmaschine 104 ausgetragene, filtrierte Kunststoffschmelze 106 mittels einer Filtereinrichtung filtriert und/oder mittels einer Granuliereinrichtung granuliert werden. In einer anderen Variante kann die aus der Mehrwellenschneckenmaschine 104 ausgetragene, filtrierte Kunststoffschmelze 106 einem Extrusionswerkzeug, einem Strangkopfwerkzeug, einer Düsenvorrichtung, einer Schneckenmaschine oder einer anderen Weiterverarbeitungsanlage zugeführt werden.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Aufbereitungsvorrichtung
- 102: Kunststoff-Recyclingmaterial
- 104: Mehrwellenschneckenmaschine
- 106: Kunststoffschmelze
- 108: Gehäuse
- 110-124: Gehäuseabschnitte
- 128: Gehäusebohrungen
- 130: Behandlungselement-Wellen
- 132: Antriebsmotor
- 134: Drehachsen
- 136: Verzweigungsgetriebe
- 138: Kupplung
- 140: Förderrichtung
- 142: Einzugszone
- 144: Plastifizierzone
- 146: Stauzone
- 148: Austragszone
- 150: Zuführöffnung
- 152: Haupt-Einlauftrichter
- 154: Förder-Schneckenelemente
- 156: Knetelemente
- 158: Stauelement
- 160: Schmelzekanal
- 162: Schmelzefiltereinrichtung
- 164: Ausmündung
- 166: Einmündung
- 168: Schmelzefilter
- 170: Druckaufbaueinheit
- 172: Schneckenelemente
- 174: Entgasungsöffnung
- 176: Vakuum-Entgasungseinrichtung
- 178: Vakuumpumpe
- 180: Abscheider
- 182: Düsenplatte
- 184: Austragsöffnung

## Patentansprüche

1. Vorrichtung (100) zum Aufbereiten von Kunststoffmaterial (102), umfassend:
- eine Mehrwellenschneckenmaschine (104), insbesondere eine Zweiwellen-Schneckenmaschine, mit zumindest zwei in einem Gehäuse (108) gelagerte Behandlungselement-Wellen (130) zum Plastifizieren des zugeführten Kunststoffmaterials (102) zu einer Kunststoffschmelze (106), wobei die Mehrwellenschneckenmaschine (104) eine Plastifizierzone (144), eine Austragszone (148) und eine zwischen der Plastifizierzone (144) und der Austragszone (148) angeordnete Stauzone (146) mit zumindest einem die Kunststoffschmelze (106) aufstauenden Stauelement (158) aufweist;
- mindestens einen die Stauzone (146) überbrückenden Schmelzekanal (160), der die Plastifizierzone (144) und die Austragszone (148) miteinander verbindet; und
- mindestens eine Schmelzefiltereinrichtung (162) zum Filtrieren der Kunststoffschmelze (106), die in dem Schmelzekanal (160) wirksam angeordnet ist.

2. Vorrichtung (100) nach Anspruch 1, **dadurch gekennzeichnet, dass** in dem Gehäuse (108) unmittelbar vor der Stauzone (146) eine Ausmündung (164) in den zur Schmelzefiltereinrichtung (162) führenden Schmelzekanal (160) vorgesehen ist und dass in dem Gehäuse (108) unmittelbar nach der Stauzone (146) eine Einmündung (166) des von der Schmelzefiltereinrichtung (162) kommenden Schmelzekanals (160) vorgesehen ist.

3. Vorrichtung (100) nach wenigstens einem der vorhergehenden Ansprüche,
**dadurch gekennzeichnet, dass** die zumindest eine Schmelzefiltereinrichtung (162) einen kontinuierlich oder diskontinuierlich betreibbaren Schmelzefilter (168) aufweist.

4. Vorrichtung (100) nach wenigstens einem der vorhergehenden Ansprüche,
**dadurch gekennzeichnet, dass** die zumindest eine Schmelzefiltereinrichtung (162) eine Druckaufbaueeinheit (170) zum Aufbauen eines Schmelzedrucks, insbesondere eine Schmelzepumpe, aufweist.

5. Vorrichtung (100) nach wenigstens einem der vorhergehenden Ansprüche,
**dadurch gekennzeichnet, dass** in dem Gehäuse (108) zumindest eine Entgasungsöffnung (174) zum Entgasen vorgesehen ist, wobei die zumindest eine Entgasungsöffnung (174) in einer Einzugszone (142), der Plastifizierzone (144), der Stauzone (146) oder der Austragszone (148) der Mehrwellenschneckenmaschine (104) angeordnet ist.

6. Vorrichtung (100) nach Anspruch 5, **dadurch gekennzeichnet, dass** die zumindest eine Entgasungsöffnung (174) mit einer Entgasungseinrichtung (176), insbesondere Vakuum-Entgasungseinrichtung, verbundenen ist oder dass die zumindest eine Entgasungsöffnung (174) zur Entgasung und/oder Entlüftung gegenüber Atmosphäre ausgebildet ist.

7. Vorrichtung (100) nach wenigstens einem der vorhergehenden Ansprüche,
**dadurch gekennzeichnet, dass** die Mehrwellenschneckenmaschine (104) ein Doppelschneckenextruder ist.

8. Vorrichtung (100) nach wenigstens einem der vorhergehenden Ansprüche,
**dadurch gekennzeichnet, dass** an einem in Förderrichtung (140) letzten Gehäuseabschnitt (124) des Gehäuses (108) eine Austragsöffnung (184) vorgesehen ist, durch die die Kunststoffschmelze (106) ausbringbar ist, wobei an der Austragsöffnung (184) ein Reaktor, ein Extrusionswerkzeug, ein Strangkopfwerkzeug, eine Düsenvorrichtung oder eine Schneckenmaschine angeschlossen ist, oder wobei an der Austragsöffnung (184) eine Filtereinrichtung und/oder eine Granuliereinrichtung angeschlossen ist.

9. Verfahren zum Aufbereiten von Kunststoffmaterial (102), umfassend folgende Schritte:
- Zuführen des Kunststoffmaterials (102) in eine Mehrwellenschneckenmaschine (104), insbesondere Zweiwellen-Schneckenmaschine;
- Plastifizieren des zugeführten Kunststoffmaterials (102) mittels der Mehrwellenschneckenmaschine (104) zu einer Kunststoffschmelze (106);
- Herausführen zumindest eines Teils der Kunststoffschmelze (106) aus der Mehrwellenschneckenmaschine (104), Filtrieren der herausgeführten Kunststoffschmelze (106) mittels einer Schmelzefiltereinrichtung (162) und Zurückführen der filtrierten Kunststoffschmelze (106) in die Mehrwellenschneckenmaschine (104).

10. Verfahren nach Anspruch 9, **dadurch gekennzeichnet, dass** die Kunststoffschmelze (106) homogenisiert und/oder entgast wird.

11. Verfahren nach wenigstens einem der vorhergehenden Ansprüche 9 bis 10,
**dadurch gekennzeichnet, dass** die Kunststoffschmelze (106) aus der Mehrwellenschneckenmaschine (104) ausgetragen wird und dann mittels eines Reaktors, wie Pyrolysereaktor, eine Pyrolyse der Kunststoffschmelze (106) erfolgt.

12. Verfahren nach wenigstens einem der vorhergehenden Ansprüche 9 bis 10,
**dadurch gekennzeichnet, dass** die Kunststoffschmelze (106) aus der Mehrwellenschneckenmaschine (104) ausgetragen und dann einem Reaktor, einem Extrusionswerkzeug, einem Strangkopfwerkzeug, einer Düsenvorrichtung, einer Schneckenmaschine, einer Filtereinrichtung, einer Granuliereinrichtung oder einer Weiterverarbeitungsanlage zugeführt wird.
